# EUROPEAN PATENT APPLICATION

(11) **EP 4 835 689 A1**
(43) Date of publication of application: **04.11.2026**
(21) Application number: 24916424.5
(22) Date of filing: 11.09.2024
(51) Int. Cl.: G06F 16/58, G06T 11/60

(54) **IMAGE GENERATION METHOD AND APPARATUS**

(30) Priority: 08.01.2024 CN 202410028193
(71) Applicant: Huawei Technologies Co., Ltd., Shenzhen, Guangdong 518129 (CN)
(72) Inventor: ZHANG, Hang, Shenzhen, Guangdong 518129 (CN); LI, Kehan, Shenzhen, Guangdong 518129 (CN); QIAN, Bo, Shenzhen, Guangdong 518129 (CN); WANG, Zhizhong, Shenzhen, Guangdong 518129 (CN); DENG, Yangyang, Shenzhen, Guangdong 518129 (CN)
(74) Representative: Gill Jennings & Every LLP
(86) International application number: PCT/CN2024/118259
(87) International publication number: WO 2025/148372

(57) **Abstract**

The present invention relates to the field of image processing technologies, and discloses an image generation method and apparatus, to improve accuracy of an image generation method. The method includes: obtaining first data (S501); determining first information based on the first data (S502); adjusting a parameter of a second model based on a first weight coefficient (S503); and inputting second data into the second model to obtain a target image (S504). The first data is used to generate the target image. The first information includes the first weight coefficient. The first weight coefficient is a weight coefficient of a first model. The first model is used to generate an adjustment parameter of the second model. The second model is used to generate the target image. The second data includes the first data. Adjusting a parameter of an image generation model using user input data can improve a degree of matching between the image generation model and the user input data, and increase a degree of a correspondence between a generated image output by the image generation model and the user input data, to improve accuracy of the image generation method.

## Description

This application claims priority to Chinese Patent Application No. 202410028193.5, filed with the China National Intellectual Property Administration on January 8, 2024 and entitled "IMAGE GENERATION METHOD AND APPARATUS", which is incorporated herein by reference in its entirety.

### TECHNICAL FIELD

Embodiments of this application relate to the field of image processing technologies, and in particular, to an image generation method and apparatus.

### BACKGROUND

In the field of artificial intelligence, computer vision technologies are applied to many fields such as image generation, semantic segmentation, and object detection. In the computer vision technologies, as important parts of the computer vision technologies, image generation technologies are also gradually popularized in the fields of science and technology and art.

An image generation method may be used to convert user input data (for example, a text or an image) into a generated image corresponding to the user input data. The generated image in the image generation method may be a real photo, a painting, a three-dimensional (three-dimensional, 3D) rendered image, or a fully imagined image.

Accuracy of the image generation method indicates a degree of a correspondence between the generated image and the user input data.

### SUMMARY

Embodiments of this application provide an image generation method and apparatus, to improve accuracy of an image generation method. The following technical solutions are used in embodiments of this application, to achieve the foregoing objectives.

According to a first aspect, an embodiment of this application provides an image generation method. The method includes: obtaining first data; determining first information based on the first data; adjusting a parameter of a second model based on a first weight coefficient; and inputting second data into the second model to obtain a target image. The first data is used to generate the target image. The first information includes the first weight coefficient. The first weight coefficient is a weight coefficient of a first model. The first model is used to generate an adjustment parameter of the second model. The second model is used to generate the target image. The second data includes the first data.

It can be learned that, in the method provided in this embodiment of this application, on a basis of an image generation technology, a step of adjusting a parameter of an image generation model (namely, the second model) using user input data (namely, the first data) is additionally introduced. Adjusting the parameter of the image generation model using the user input data can improve a degree of matching between the image generation model and the user input data, and increase a degree of a correspondence between a generated image output by the image generation model and the user input data, to improve accuracy of an image generation method.

In a possible implementation, a first feature vector may be determined based on the first data. When a target second feature vector exists in a first database, the first feature vector is input into the first database to obtain the first information, where the first database includes Q second feature vectors and P pieces of first information corresponding to the Q second feature vectors, the target second feature vector is a second feature vector whose similarity to the first feature vector is greater than a similarity threshold, and both Q and P are positive integers. When the target second feature vector does not exist in the first database, the first feature vector is input into a second database to obtain training set data, and the training set data is input into the second model to obtain the first information, where the second database includes W third feature vectors and E pieces of training set data corresponding to the W third feature vectors, and both W and E are positive integers.

It can be learned that, in the method provided in this embodiment of this application, on one hand, when a weight coefficient matching the user input data exists in a knowledge base, the parameter of the image generation model can be directly adjusted using the existing weight coefficient in the knowledge base, to improve the degree of the match between the image generation model and the user input data. On the other hand, when the weight coefficient matching the user input data does not exist in the knowledge base, existing data in the knowledge base can be used as a training set to generate, in real time, the weight coefficient matching the user input data, to improve the degree of the match between the image generation model and the user input data and universality of the image generation model, so that the image generation model is applicable to more image generation scenarios.

In a possible implementation, the similarity includes a sine-cosine similarity, a Euclidean distance, a Manhattan distance, a Chebyshev distance, a Hamming distance, or another similarity.

In a possible implementation, the second database may include a real-time database. The real-time database includes real-time training set data. The real-time training set data is training set data obtained through real-time search.

It can be learned that, according to the method provided in this embodiment of this application, training set data that matches user data can be obtained through real-time search, to improve the degree of the match between the image generation model and the user input data and real-time performance of the image generation model, so that the image generation model can generate an image that has a high matching degree with a real-time hot topic.

In a possible implementation, when the target image generated using the first data is a figure image or an animal image, the first weight information and the first data may be input into a third model to obtain target intermediate data, where the target intermediate data is intermediate data of the figure image or intermediate data of the animal image; and the parameter of the second model is adjusted based on the target intermediate data.

It can be learned that, according to the method provided in this embodiment of this application, when the figure image or the animal image is generated, the parameter of the image generation model can be adjusted based on intermediate data (for example, a figure contour image, an animal contour image, or a posture image) generated by the third model, so that the image generation model can more accurately output the figure image or the animal image that matches the user input data.

In a possible implementation, the second data may be input into the second model to obtain M generated images, where M is a positive integer; and N generated images in the M generated images are determined as the target image, where N is a positive integer.

For example, objective indicator calculation may be performed on the M generated images, and the N generated images with highest objective indicator scores in the M generated images are determined as the target image.

In a possible implementation, the first information may further include an identifier, where the identifier represents a style of the target image.

It may be understood that adjusting the parameter of the image generation model using the identifier that represents a style of an image corresponding to the user data can further improve the degree of matching between the image generation model and the user input data, and further increase the degree of the correspondence between the generated image output by the image generation model and the user input data, to further improve accuracy of the image generation method.

In a possible implementation, the second data may further include the identifier, where the identifier represents the style of the target image.

It may be understood that additionally inputting, to the image generation model, the identifier that represents the style of the image corresponding to the user data can further increase the degree of the correspondence between the generated image output by the image generation model and the user input data, to further improve accuracy of the image generation method.

In a possible implementation, the first data may include at least one of a text, a picture, an audio, or a video.

It may be understood that, on one hand, compared with using only the text as input data for generating an image by the image generation model, additionally introducing the picture, the audio, and the video as the input data for generating the image by the image generation model can improve applicability of the image generation model, so that the image generation model is applicable to more image generation scenarios. On the other hand, adjusting the parameter of the image generation model using the text, the picture, the audio, and the video that are input by the user can improve the degree of the match between the image generation model and the user input data, and increase the degree of the correspondence between the generated image output by the image generation model and the user input data, to improve accuracy of the image generation method.

According to a second aspect, an embodiment of this application provides an image generation apparatus. The apparatus includes a transceiver unit and a processing unit. The transceiver unit is configured to obtain first data, where the first data is used to generate a target image. The processing unit is configured to determine first information based on the first data, where the first information includes a first weight coefficient, the first weight coefficient is a weight coefficient of a first model, the first model is used to generate an adjustment parameter of a second model, and the second model is used to generate the target image. The processing unit is further configured to adjust a parameter of the second model based on the first weight coefficient. The transceiver unit is further configured to input second data into the second model to obtain the target image, where the second data includes the first data.

In a possible implementation, the processing unit is specifically configured to: determine a first feature vector based on the first data; and when a target second feature vector exists in a first database, input the first feature vector into the first database to obtain the first information, where the first database includes Q second feature vectors and P pieces of first information corresponding to the Q second feature vectors, the target second feature vector is a second feature vector whose similarity to the first feature vector is greater than a similarity threshold, and both Q and P are positive integers; or when the target second feature vector does not exist in the first database, input the first feature vector into a second database to obtain training set data, and input the training set data into the second model to obtain the first information, where the second database includes W third feature vectors and E pieces of training set data corresponding to the W third feature vectors, and both W and E are positive integers.

In a possible implementation, the second database includes a real-time database. The real-time database includes real-time training set data. The real-time training set data is training set data obtained through real-time search.

In a possible implementation, the processing unit is specifically configured to: when the target image generated using the first data is a figure image or an animal image, input the first weight information and the first data into a third model to obtain target intermediate data, where the target intermediate data is intermediate data of the figure image or intermediate data of the animal image; and adjust the parameter of the second model based on the target intermediate data.

In a possible implementation, the transceiver unit is specifically configured to: input the second data into the second model to obtain M generated images, where M is a positive integer; and determine N generated images in the M generated images as the target image, where N is a positive integer.

In a possible implementation, the first information further includes an identifier, where the identifier represents a style of the target image.

In a possible implementation, the second data further includes the identifier, where the identifier represents the style of the target image.

In a possible implementation, the first data includes at least one of a text, a picture, an audio, or a video.

According to a third aspect, an embodiment of this application further provides an image generation apparatus. The image generation apparatus includes at least one processor. When the at least one processor executes program code or instructions, the method according to any one of the first aspect and the possible implementations of the first aspect is implemented.

Optionally, the image generation apparatus may further include at least one memory. The at least one memory is configured to store the program code or the instructions.

According to a fourth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect and the possible implementations of the first aspect.

Optionally, the chip may be further an integrated circuit.

According to a fifth aspect, an embodiment of this application further provides a computer-readable storage medium, configured to store a computer program. The computer program is used to implement the method according to any one of the first aspect and the possible implementations of the first aspect.

According to a sixth aspect, an embodiment of this application further provides a computer program product including instructions. When the computer program product runs on a computer, the computer is enabled to implement the method according to any one of the first aspect and the possible implementations of the first aspect.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other drawings from these accompanying drawings without creative efforts.
FIG. 1 is a diagram of a structure of an image processing system according to an embodiment of this application;
FIG. 2 is a diagram of a structure of a database according to an embodiment of this application;
FIG. 3 is a diagram of a structure of a first database according to an embodiment of this application;
FIG. 4 is a diagram of a structure of a second database according to an embodiment of this application;
FIG. 5 is a schematic flowchart of an image generation method according to an embodiment of this application;
FIG. 6 is a diagram of a data filtration procedure according to an embodiment of this application;
FIG. 7 is a diagram of a data retrieval procedure according to an embodiment of this application;
FIG. 8 is a diagram of a model training procedure according to an embodiment of this application;
FIG. 9 is a diagram of an image generation procedure according to an embodiment of this application;
FIG. 10 is a diagram of a structure of an image generation apparatus according to an embodiment of this application;
FIG. 11 is a diagram of a structure of a chip according to an embodiment of this application;
FIG. 12 is a diagram of a structure of an electronic device according to an embodiment of this application; and
FIG. 13 is a diagram of a structure of another image generation apparatus according to an embodiment of this application.

### DESCRIPTION OF EMBODIMENTS

The following clearly and fully describes technical solutions in embodiments of this application with reference to accompanying drawings in embodiments of this application. It is clear that the described embodiments are merely some rather than all of embodiments of this application. All other embodiments obtained by a person of ordinary skill in the art without creative efforts based on embodiments of this application shall fall within the protection scope of embodiments of this application.

The term "and/or" in this specification describes only an association relationship between associated objects, and indicates that three relationships may exist. For example, A and/or B may indicate the following three cases: Only A exists, both A and B exist, and only B exists.

In the specification and the accompanying drawings of embodiments of this application, the terms "first", "second", and the like are intended to distinguish between different objects or distinguish between different processing performed on a same object, but do not indicate a particular order of the objects.

In addition, the terms "including", "having", and any variants thereof mentioned in the descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in the descriptions of embodiments of this application, a term like "example" or "for example" is used to represent giving an example, an illustration, or a description. Any embodiment or design solution described as "example" or "for example" in embodiments of this application should not be construed as being more preferred or advantageous than another embodiment or design solution. Exactly, use of the term "example" or "for example" is intended to present a related concept in a specific manner.

Before the technical solutions in this application are described, some terms in this application are first explained and described. The following related explanations may be combined with the technical solutions in embodiments of this application as optional solutions, and all fall within the protection scope of embodiments of this application. Embodiments of this application include at least a part of the following content.

Stable diffusion (stable diffusion, SD) is an open-source text-to-image generation model based on deep learning, and is mainly used to generate a detailed image based on text descriptions.

A large language model (large language model, LLM) is a super-large deep learning model pre-trained based on a large amount of data, may execute an open-domain task, for example, text summarization or language translation, and has a specific logical thinking and reasoning capability.

Low rank adaptation (low rank adaptation, LoRA) is a technology that approximates a high-dimensional structure of a large model using a low-dimensional structure to reduce complexity of the large model, and can implement efficient model fine-tuning. This technology can adapt the large model to a specific task or field more quickly and effectively.

Contrastive language-image pre-training (contrastive language-image pre-training, CLIP) is a pre-trained neural network model used to match an image and a text. This task is widely applied to the multi-modal field, and is used for text and image retrieval. The model is pre-trained using a large amount of paired internet data, structurally includes two branches: a text encoder and an image encoder, is used to learn a matching similarity between the image and the text, and therefore can retrieve the image based on the text or retrieve the text based on the image. In addition, a training strategy of image-text contrastive learning can be further applied to a retrieval task of another modality (for example, an audio or a video).

DreamBooth (DreamBooth, DB) is a customized and personalized text-to-image generation method, can fine-tune a diffusion model using a customized theme, and can obtain good effect using only a small amount of training data.

Bootstrapping language-image pre-training (bootstrapping language-image pre-training 2, BLIP-2) is a visual language model used for image-text multi-modal understanding. The model includes a visual encoder, a text encoder, a query transformer (Q-Former), and an LLM, and is used to align two modalities: vision and a language. Using a pre-trained visual encoder and LLM, this method can implement image caption generation, visual question answering, fine-grained image retrieval, and the like. In addition, the LLM is replaced with a model that has more parameters and has instruction following and chain-of-thought capabilities, to retrieve local information in an image and a text.

A prompt (prompt) is a description text input to the stable diffusion model.

Text-to-image generation means generating, based on a text description input by a user, a picture that conforms to semantics, for example, a core element or a semantic relationship included in a text.

Image synthesis means fusing a current image based on a style of a group of images provided by a user.

Image restoration and super-resolution means adjusting, based on an original image provided by a user, a detail and resolution of the image.

Image-to-image generation means editing, based on an image provided by a user, a part of a region of the picture and controlling image generation using an external condition.

In the field of artificial intelligence, computer vision technologies are applied to many fields such as image generation, semantic segmentation, and object detection. In the computer vision technologies, as important parts of the computer vision technologies, image generation technologies are also gradually popularized in the fields of science and technology and art.

An image generation method may be used to convert user input data (for example, a text or an image) into a generated image corresponding to the user input data. The generated image in the image generation method may be a real photo, a painting, a 3D rendered image, or a fully imagined image.

Accuracy of the image generation method indicates a degree of a correspondence between the generated image and the user input data.

In view of this, embodiments of this application provide an image generation method, to improve accuracy of an image generation method.

The technical solutions provided in embodiments of this application may be applied to an image processing system. The technical solutions provided in embodiments of this application may be applied to a plurality of application scenarios, for example, text-to-image generation, image synthesis (image style transfer), image restoration and super-resolution, and image-to-image generation.

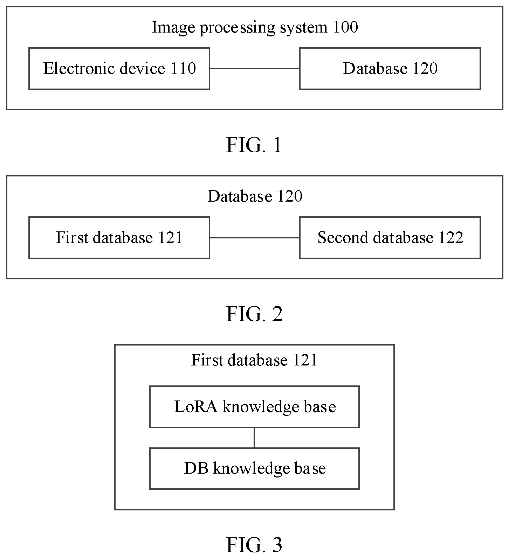

FIG. 1 is a possible and non-limitative diagram of the foregoing image processing system. As shown in FIG. 1, the image processing system 100 includes an electronic device 110 and a database 120.

The electronic device 110 may be an electronic device like a mobile phone, a desktop computer, a tablet computer, a notebook computer, a vehicle-mounted terminal, a server, an intelligent robot, a smart television, or a multimedia playing device, or may be another electronic device. This is not limited in embodiments of this application.

The database 120, the database 120 may be a knowledge base. The knowledge base is a special database used for knowledge management. The knowledge base may store information content such as a text, an image, a video, and an audio. Data corresponding to a request may be retrieved, based on the request, from data stored in the knowledge base.

It may be understood that the structure of the image processing system 100 shown in FIG. 1 does not constitute a specific limitation on the image processing system 100. In some other embodiments of this application, the image processing system 100 may include more or fewer components than those shown in the figure, or a combination of a part of the components, or splits from a part of the components, or an arrangement of different components. The components shown in the figure may be implemented by hardware, software, or a combination of the software and the hardware.

FIG. 2 is a possible and non-limitative diagram of the foregoing database. As shown in FIG. 2, the database 120 may include a first database 121 and a second database 122.

The first database 121 is used to store a weight coefficient of a model.

The second database 122 is used to store a model training data set (for example, data like a picture, a text, a video, or an audio).

It may be understood that the structure of the database 120 shown in FIG. 2 does not constitute a specific limitation on the database 120. In some other embodiments of this application, the database 120 may include more or fewer components than those shown in the figure, or a combination of a part of the components, or splits from a part of the components, or an arrangement of different components. The components shown in the figure may be implemented by hardware, software, or a combination of the software and the hardware.

FIG. 3 is a possible and non-limitative diagram of the foregoing first database. As shown in FIG. 3, the first database 121 may include a LoRA knowledge base and a DB knowledge base.

The LoRA knowledge base is used to provide LoRA weight information that matches a style or a specific concept element.

The DB knowledge base is used to provide an identifier and LoRA weight information that match a concept.

It may be understood that the structure of the first database 121 shown in FIG. 3 does not constitute a specific limitation on the first database 121. In some other embodiments of this application, the first database 121 may include more or fewer components than those shown in the figure, or a combination of a part of the components, or splits from a part of the components, or an arrangement of different components. The components shown in the figure may be implemented by hardware, software, or a combination of the software and the hardware.

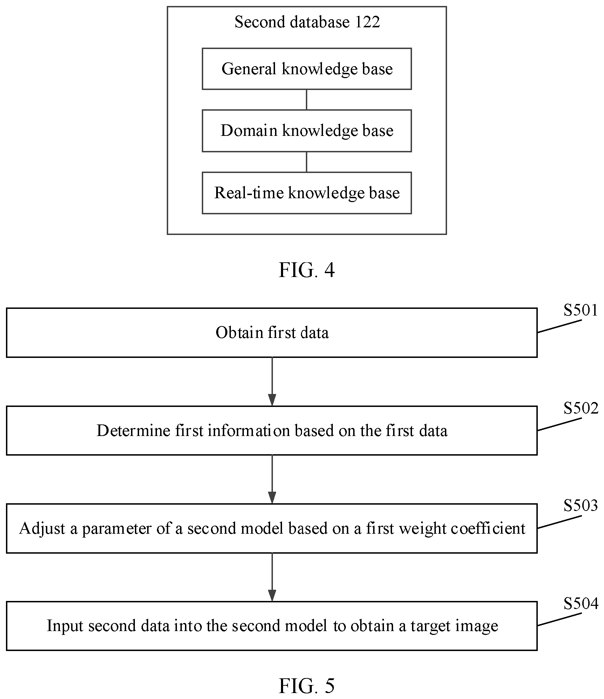

FIG. 4 is a possible and non-limitative diagram of the foregoing second database. As shown in FIG. 4, the second database 122 may include a general knowledge base, a domain knowledge base, and a real-time knowledge base.

The general knowledge base is used to provide data such as a text, a drawing, a video, and an audio in an open domain.

The domain knowledge base is used to provide data such as a text, a drawing, a video, and an audio in a vertical domain (for example, a portrait or an animal).

The real-time knowledge base is used to provide data such as a text, a drawing, a video, and an audio of a real-time hot-topic concept, and data such as a text, a drawing, a video, and an audio that can be queried online.

It may be understood that the structure of the second database 122 shown in FIG. 4 does not constitute a specific limitation on the second database 122. In some other embodiments of this application, the second database 122 may include more or fewer components than those shown in the figure, or a combination of a part of the components, or splits from a part of the components, or an arrangement of different components. The components shown in the figure may be implemented by hardware, software, or a combination of the software and the hardware.

It may be understood that, in this application, an example in which the electronic device and the database are used as execution bodies for illustrating interaction is used for illustration. However, the execution bodies for illustrating the interaction are not limited in this application. For example, the electronic device in the method in this application may alternatively be a chip, a chip system, or a processor used in the electronic device, or may be a logical node, a logical module, or software that can implement an entirety or a part of the electronic device. The knowledge base in the method in this application may alternatively be a chip, a chip system, or a processor used in the knowledge base, or may be a logical node, a logical module, or software that can implement all or a part of functions of the knowledge base.

FIG. 5 shows an image generation method according to an embodiment of this application. As shown in FIG. 5, the method includes the following steps.

S501: Obtain first data.

The first data is used to generate a target image.

In a possible implementation, the first data may include at least one of a text, a picture, an audio, or a video, that is, the first data may include the text, the picture, the audio, or the video.

The text may include a category word. The category term indicates a type of the target image. For example, a category word, namely, a vehicle, indicates that the target image is a vehicle image.

The text may include a positive prompt and/or a negative prompt.

For example, a user wants to generate an image of a zebra, and the first data obtained by an electronic device may be a text "generate an image of a zebra".

For another example, the user wants to generate an image of a train, and the first data obtained by an electronic device may be a picture of the train.

Certainly, the first data obtained by the electronic device may alternatively include a plurality of types of data. For example, the first data may be data formed by a combination of the plurality of types of data such as the picture+the text, the picture+the audio, and the audio+the text.

In a possible implementation, the first data may be filtered to filter out potential sensitive information in the first data.

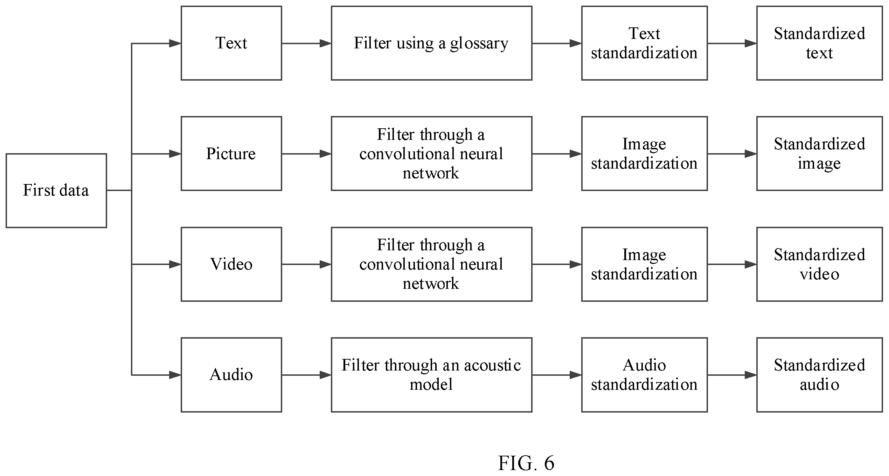

For example, as shown in FIG. 6, content in the first data may be divided into the text, the picture, the audio, and the video.

As shown in FIG. 6, the text in the first data may be filtered using a glossary (for example, a stop word (stop word) glossary). If a sensitive term exists in the text in the first data, the first data or text content in the first data may be processed. For example, the first data or the text content in the first data is invalidated, that is, an image is no longer generated based on the first data or an image is no longer generated based on the text content in the first data.

As shown in FIG. 6, the picture in the first data may be filtered using a convolutional neural network (for example, a you only look once (you only look once, YOLO) network) and a content detection model (for example, a not safe for work (not safe for work, NSFW) detection model). When a detection value of the picture is greater than a detection threshold (to be specific, it is determined that sensitive content exists in the picture), the first data or picture content in the first data may be processed. For example, the first data or the picture content in the first data is invalidated, that is, an image is no longer generated based on the first data or an image is no longer generated based on the picture content in the first data.

As shown in FIG. 6, the video in the first data may be filtered using a convolutional neural network and a content detection model. When a detection value of the video is greater than a detection threshold (to be specific, it is determined that sensitive content exists in the video), the first data or video content in the first data may be processed. For example, the first data or the video content in the first data is invalidated, that is, a video is no longer generated based on the first data or an image is no longer generated based on the video content in the first data.

As shown in FIG. 6, the audio in the first data may be filtered using an acoustic model. When a detection value of the audio is greater than a detection threshold (to be specific, it is determined that sensitive content exists in the audio), the first data or audio content in the first data may be processed. For example, the first data or the audio content in the first data is invalidated, that is, an audio is no longer generated based on the first data or an image is no longer generated based on the audio content in the first data.

In a possible implementation, the first data may be standardized, so that the first data conforms to an input of a knowledge base.

As shown in FIG. 6, text standardization may be performed on the text in the first data to obtain a standardized text.

For example, a special character in the text content in the first data may be filtered to obtain the standardized text.

As shown in FIG. 6, image standardization may be performed on the picture in the first data to obtain a standardized picture.

For example, the picture in the first data may be uniformly converted into a standardized picture in a red green blue (red green blue, RGB) format, a size (resize) format, or a sample (sample) format.

As shown in FIG. 6, image standardization may be performed on the video in the first data to obtain a standardized video.

For example, video content in the first data may be uniformly converted into a standardized video in an RGB format, a resize format, or a sample format.

As shown in FIG. 6, audio standardization may be performed on the audio in the first data.

For example, audio content in the first data may be uniformly converted into a standardized audio in a sample format.

S502: Determine first information based on the first data.

The first information includes a first weight coefficient. The first weight coefficient is a weight coefficient of a first model. The first model is used to generate an adjustment parameter of a second model. The second model is used to generate the target image.

For example, the first model may be a LoRA model, and the second model may be an SD model.

For example, the first information may further include an identifier, where the identifier represents a style of the target image.

For example, if the identifier is [token] [cartoon], the identifier represents that the style of the target image is a cartoon style.

For example, a task query instruction may be generated through an agent (Agent) index based on the first data, and the first information is obtained by querying a database based on the task query instruction.

In a possible implementation, a first feature vector may be determined based on the first data. When a target second feature vector exists in a first database, the first feature vector is input into the first database to obtain the first information. When the target second feature vector does not exist in the first database, the first feature vector is input into a second database to obtain training set data, and the training set data is input into the second model to obtain the first information.

As shown in Table 1, the first database may include Q second feature vectors and P pieces of first information corresponding to the Q second feature vectors. The target second feature vector is a second feature vector whose similarity to the first feature vector is greater than a similarity threshold, and both Q and P are positive integers. Each second feature vector may correspond to one or more pieces of first information. Each piece of first information may correspond to one or more second feature vectors.

**Table 1**

| Second feature vector | First information |
|---|---|
| Second feature vector 1 | First information 1 |
| Second feature vector 2 | First information 2 |
| Second feature vector 3 | First information 3 |
| Second feature vector 4 | First information 4 |
| ... | ... |
| ... | ... |
| ... | ... |
| Second feature vector Q | First information P |

It may be understood that, when the target second feature vector exists, the first information obtained by inputting the first feature vector into the first database includes the first information corresponding to the target second feature vector.

For example, if a similarity between the first feature vector and each of the second feature vector 2 and the second feature vector 3 is greater than a similarity, that is, the second feature vector 2 and the second feature vector 3 are the target second feature vectors, the first information obtained by inputting the first feature vector into the first database includes the first information 2 corresponding to the second feature vector 2 and the first information 3 corresponding to the second feature vector 3.

As shown in Table 2, the second database includes W third feature vectors and E pieces of training set data corresponding to the W third feature vectors, where both W and E are positive integers. Each third feature vector may correspond to one or more training data sets. Each training data set may correspond to one or more third feature vectors.

**Table 2**

| Third feature vector | Training dataset |
|---|---|
| Third feature vector 1 | Training dataset 1 |
| Third feature vector 2 | Training dataset 2 |
| Third feature vector 3 | Training dataset 3 |
| Third feature vector 4 | Training dataset 4 |
| ... | ... |
| ... | ... |
| ... | ... |
| Third feature vector W | Training dataset E |

In a possible implementation, the similarity includes a sine-cosine similarity, a Euclidean distance, a Manhattan distance, a Chebyshev distance, a Hamming distance, or another similarity.

It may be understood that, when the target second feature vector does not exist, a training set obtained by inputting the first feature vector into the first database includes a training dataset corresponding to a target third feature vector. The target third feature vector is a third feature vector whose similarity to the first feature vector is greater than the similarity threshold.

For example, if a similarity between the third feature vector 1 and the first feature vector is greater than a similarity, that is, the third feature vector 1 is the target third feature vector, a training dataset obtained by inputting the first feature vector into the second database includes the training dataset 1 corresponding to the third feature vector 1.

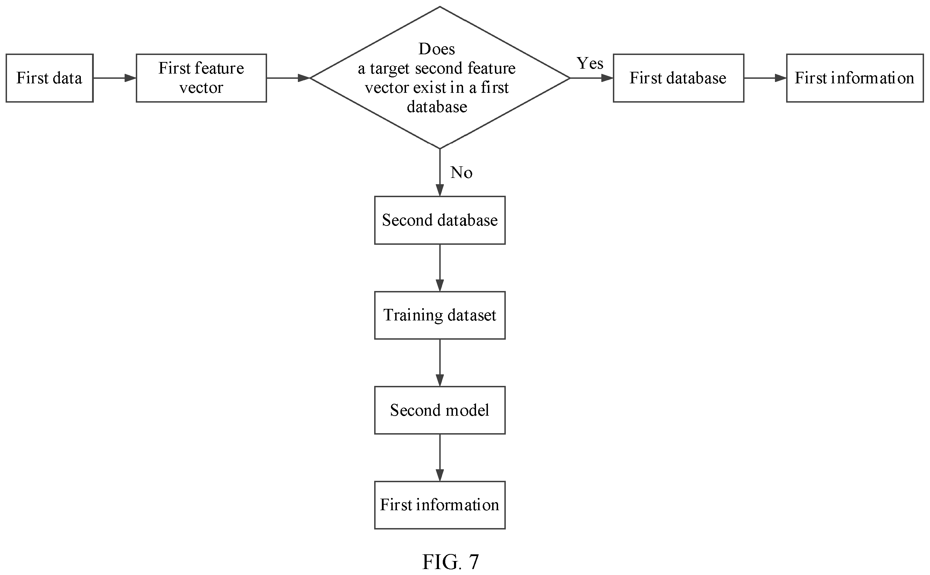

For example, as shown in FIG. 7, when the target second feature vector exists in the first database, the first feature vector obtained based on the first data is input into the first database, to obtain the first information.

For another example, as shown in FIG. 7, if the target second feature vector does not exist in the first database, the first feature vector obtained based on the first data is input into the second database, to obtain the training set data. The obtained training set data is input into the second model, to obtain the first information.

Optionally, the second database includes a real-time database (real-time knowledge base). The real-time database includes real-time training set data. The real-time training set data is training set data obtained through real-time search.

For example, after the first feature vector is input into the real-time database, the real-time database may perform real-time search based on the first feature vector, to obtain the training set data, and output the training set data obtained through the real-time search based on the first feature vector.

In a possible implementation, the first database may be trained based on the first information obtained based on the training set data. In other words, the first feature vector and the first information obtained based on the training set data may be sent to the first database. In this way, after receiving the first feature vector next time, the first database can directly output the corresponding first information, without obtaining the training data set from the second database.

In a possible implementation, the first information may be further displayed. For example, the first information may be displayed through a display of the electronic device.

In a possible implementation, the first feature vector may include a first coarse-grained feature vector and/or a first fine-grained feature vector.

For the text content in the first data, the first fine-grained feature vector represents a global text, and the first fine-grained feature vector represents a key text segment.

For the video, the image, and the audio in the first data, the first fine-grained feature vector represents sampled global content, and the first fine-grained feature vector represents sampled high-frequency and regional main body information.

In a possible implementation, the first data may be input into a vector model to obtain the first feature vector.

In a possible implementation, the vector model may include a CLIP model, a BLIP-2 model, or an LLM model.

For example, the first data may be input into the CLIP model to obtain the first coarse-grained feature vector.

For another example, the first data may be input into the BLIP-2 model to obtain the first fine-grained feature vector.

S503: Adjust a parameter of the second model based on the first weight coefficient.

In a possible implementation, when the target image generated using the first data is a figure image or an animal image, the first weight information and the first data may be input into a third model to obtain target intermediate data; and the parameter of the second model is adjusted based on the target intermediate data.

The target intermediate data is intermediate data of the figure image or intermediate data of the animal image. For example, the target intermediate data may be a figure contour image, an animal contour image, or a posture image.

For example, the third model may be a control network (ControlNet) model.

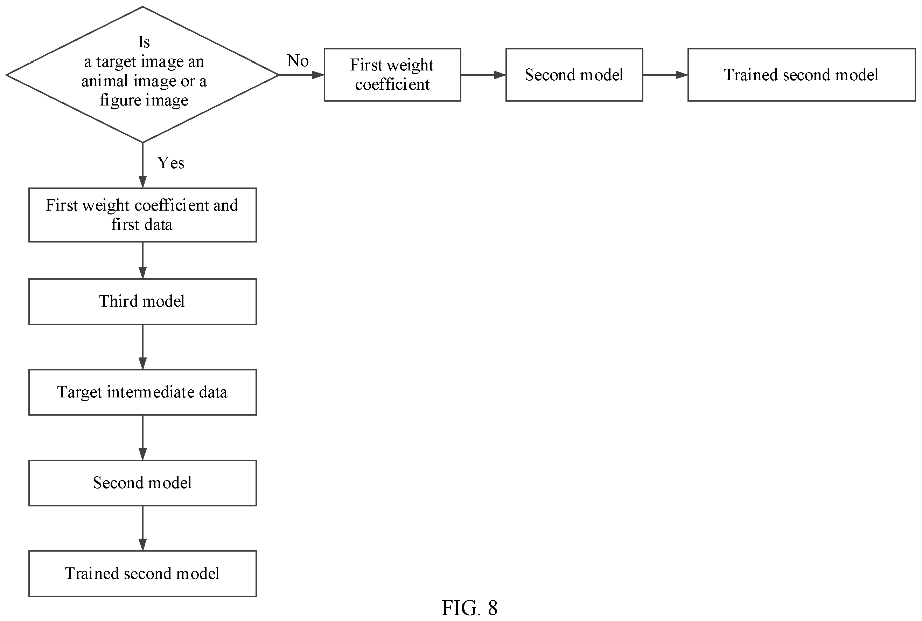

For example, as shown in FIG. 8, when the target image generated using the first data is a figure image or an animal image, the first weight information and the first data are input into the third model to obtain target intermediate data, and then the parameter of the second model is adjusted based on the target intermediate data, to obtain a trained second model.

For another example, as shown in FIG. 8, when the target image generated using the first data is neither a figure image nor an animal image, the parameter of the second model may be directly adjusted based on the first weight coefficient, to obtain a trained second model.

It should be noted that the first model may be understood as a fine-tuning model. The fine-tuning model may be connected to another model, and may freeze a parameter of another model. Only a weight coefficient of the first model is fine-tuned, so that the another model may be trained. Therefore, the parameter of the second model may be adjusted based on the first weight coefficient.

For example, the first model is a LoRA model, and the second model is an SD model. The LoRA model may be a small model generated through training under a large SD model, and is used to fine-tune a large model. The LoRA may be used to adjust a figure, a style, or the like.

The fine-tuning model may be considered as a plug-in of the large model (for example, the SD model), and is used to train a painting style/intellectual property (intellectual property, IP)/the figure by using a small amount of data, without modifying the SD model, to meet a customization requirement. Required training resources are less than those for training the SD model. To reduce training costs, the LoRA model is used to train only a low-rank matrix. During use, a parameter of the LoRA model is injected into the SD model, to change a generation style of the SD model or add a new figure/new IP to the SD model. The entire process is a linear relationship, and it may be considered that a model with brand-new effect is obtained after the original SD model is superimposed with the LoRA model.

S504: Input the second data into the second model to obtain the target image.

The second data includes the first data.

In a possible implementation, the second data may further include the identifier. The identifier represents the style of the target image. For example, if an identifier [token] [Gothic] represents that the style of the target image is a Gothic style.

In a possible implementation, the second data may be input into the second model to obtain M generated images, where M is a positive integer; and N generated images in the M generated images are determined as the target image, where N is a positive integer.

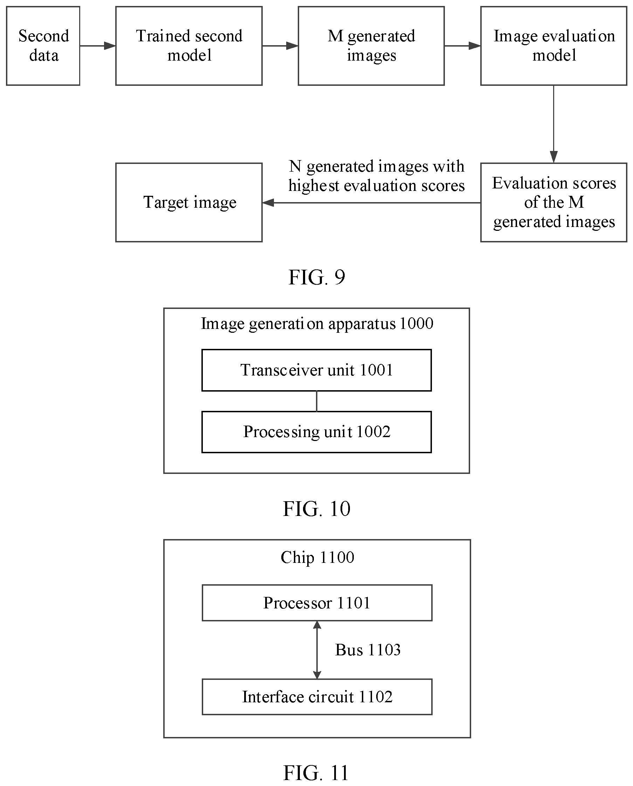

For example, as shown in FIG. 9, the second data may be input into the trained second model to obtain the M generated images, and then the M generated images are input into an image evaluation model to obtain evaluation scores of the M images. Then, the N generated images with highest evaluation scores are input as the target image.

For example, the second data may be encoded through an encoder (Encoder) to obtain encoded data, the encoded code may be input into the trained second model to obtain the M generated images, and then the M generated images are input into the image evaluation model to obtain the evaluation scores of the M images. Then, four generated images with highest evaluation scores are input as the target image.

For example, the image evaluation model may include a semantic consistency model (for example, a CLIP model) and/or an aesthetic model (for example, a human preference score (HPS) model).

In a possible implementation, the target image may be further displayed. For example, the target image may be displayed through the display of the electronic device.

It can be learned that, in the method provided in this embodiment of this application, on a basis of an image generation technology, a step of adjusting a parameter of an image generation model (namely, the second model) using user input data (namely, the first data) is additionally introduced. Adjusting the parameter of the image generation model using the user input data can improve a degree of matching between the image generation model and the user input data, and increase a degree of a correspondence between a generated image output by the image generation model and the user input data, to improve accuracy of an image generation method.

With reference to FIG. 10, the following describes an image generation apparatus configured to perform the foregoing image generation method.

It may be understood that, to implement the foregoing functions, the image generation apparatus includes a corresponding hardware structure and/or software module for performing each function. With reference to algorithm steps in the examples described in embodiments disclosed in this specification, embodiments of this application can be implemented in a form of hardware or a combination of the hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the image generation apparatus may be divided into functional modules based on the foregoing method examples. For example, each functional module may be obtained through division based on each corresponding function, or two or more functions may be integrated into one processing module. The integrated module may be implemented in a form of hardware. It should be noted that, in this embodiment, division into the modules is an example, is merely logical function division, and may be other division during actual implementation.

When each functional module is obtained through division based on each corresponding function, FIG. 10 is a diagram of possible composition of the image generation apparatus in the foregoing embodiment. The apparatus may be an electronic device, or may be a module (for example, a processor, a chip, or a chip system) used in the electronic device, or may be a logical node, a logical module, or software that can implement all or a part of functions of the electronic device. As shown in FIG. 10, the image generation apparatus 1000 may include a transceiver unit 1001 and a processing unit 1002.

The transceiver unit 1001 is configured to obtain first data, where the first data is used to generate a target image.

The processing unit 1002 is configured to determine first information based on the first data, where the first information includes a first weight coefficient, the first weight coefficient is a weight coefficient of a first model, the first model is used to generate an adjustment parameter of a second model, and the second model is used to generate the target image.

The processing unit 1002 is further configured to adjust a parameter of the second model based on the first weight coefficient.

The transceiver unit 1001 is further configured to input second data into the second model to obtain the target image, where the second data includes the first data.

In a possible implementation, the processing unit 1001 is specifically configured to: determine a first feature vector based on the first data; and when a target second feature vector exists in a first database, input the first feature vector into the first database to obtain the first information, where the first database includes Q second feature vectors and P pieces of first information corresponding to the Q second feature vectors, the target second feature vector is a second feature vector whose similarity to the first feature vector is greater than a similarity threshold, and both Q and P are positive integers; or when the target second feature vector does not exist in the first database, input the first feature vector into a second database to obtain training set data, and input the training set data into the second model to obtain the first information, where the second database includes W third feature vectors and E pieces of training set data corresponding to the W third feature vectors, and both W and E are positive integers.

In a possible implementation, the second database includes a real-time database. The real-time database includes real-time training set data. The real-time training set data is training set data obtained through real-time search.

In a possible implementation, the processing unit 1002 is specifically configured to: when the target image generated using the first data is a figure image or an animal image, input the first weight information and the first data into a third model to obtain target intermediate data, where the target intermediate data is intermediate data of the figure image or intermediate data of the animal image; and adjust the parameter of the second model based on the target intermediate data.

In a possible implementation, the transceiver unit 1001 is specifically configured to: input the second data into the second model to obtain M generated images, where M is a positive integer; and determine N generated images in the M generated images as the target image, where N is a positive integer.

In a possible implementation, the first information further includes an identifier, where the identifier represents a style of the target image.

In a possible implementation, the second data further includes the identifier, where the identifier represents the style of the target image.

In a possible implementation, the first data includes at least one of a text, a picture, an audio, or a video.

An embodiment of this application further provides a chip. FIG. 11 is a diagram of a structure of a chip 1100. The chip 1100 includes one or more processors 1101 and an interface circuit 1102. Optionally, the chip 1100 may further include a bus 1103.

The processor 1101 may be an integrated circuit chip and has a signal processing capability. In an implementation process, the steps of the foregoing image generation method may be completed through a hardware integrated logic circuit in the processor 1101 or by using instructions in a form of software.

Optionally, the processor 1101 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component, and may implement or perform the method and steps that are disclosed in embodiments of this application. The general-purpose processor may be a microprocessor, or the processor may be any conventional processor or the like.

The interface circuit 1102 may be configured to send or receive data, instructions, or information. The processor 1101 may process the data, the instructions, or other information received through the interface circuit 1102, and may send processed information through the interface circuit 1102.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure. The processor may perform a corresponding operation by invoking the operation instructions stored in the memory (the operation instructions may be stored in an operating system).

Optionally, the chip may be used in the image generation apparatus in embodiments of this application. Optionally, the interface circuit 1102 may be configured to output an execution result of the processor 1101. For the image generation method provided in one or more of the embodiments of this application, refer to the foregoing embodiments. Details are not described herein again.

It should be noted that a function corresponding to each of the processor 1101 and the interface circuit 1102 may be implemented through a hardware design, or may be implemented through a software design, or may be implemented through a combination of software and hardware. This is not limited herein.

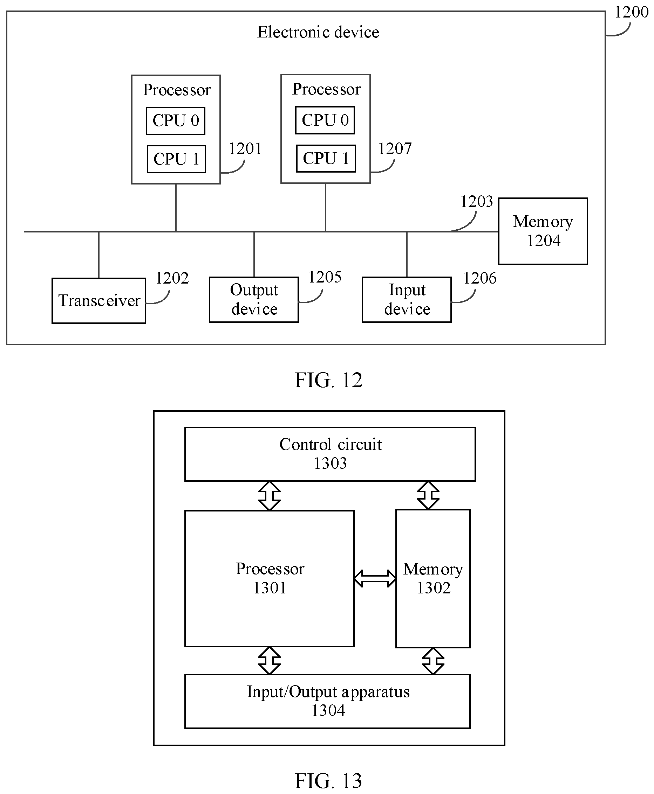

FIG. 12 is a diagram of a structure of an electronic device according to an embodiment of this application. The electronic device 1200 may be a processor, or a chip or a functional module in the processor. As shown in FIG. 12, the electronic device 1200 includes a processor 1201, a transceiver 1202, and a communication line 1203.

The processor 1201 is configured to perform any step in the image generation method provided in embodiments of this application, and in a process of performing any step in the image generation method provided in embodiments of this application, may select to invoke the transceiver 1202 and the communication line 1203 to complete a corresponding operation.

Further, the electronic device 1200 may further include a memory 1204. The processor 1201, the memory 1204, and the transceiver 1202 may be connected to each other through the communication line 1203.

The processor 1201 is a processor, a general-purpose processor, a network processor (network processor, NP), a digital signal processor (digital signal processor, DSP), a microprocessor, a microcontroller, a programmable logic device (programmable logic device, PLD), or any combination thereof. The processor 1201 may alternatively be another apparatus having a processing function, for example, a circuit, a device, or a software module. This is not limited.

The transceiver 1202 is configured to communicate with another device or another communication network. The another communication network may be an Ethernet, a radio access network (radio access network, RAN), a wireless local area network (wireless local area network, WLAN), or the like. The transceiver 1202 may be a module, a circuit, a transceiver, or any apparatus that can implement communication.

The transceiver 1202 is mainly configured to receive and send commands, information, and the like, and may include a transmitter and a receiver that separately send and receive the commands, the information, and the like. An operation other than receiving and sending the commands, the information, and the like is implemented by the processor.

The communication line 1203 is configured to transmit information between components included in the electronic device 1200.

In a design, the processor may be considered as a logic circuit, and the transceiver may be considered as an interface circuit.

The memory 1204 is configured to store the instructions. The instructions may be a computer program.

The memory 1204 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM), and is used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 1204 may alternatively be a compact disc read-only memory (compact disc read-only memory, CD-ROM) or another compact disc storage, an optical disk storage (including a compact disc, a laser disc, an optical disc, a digital versatile disc, a Blu-ray disc, and the like), a magnetic disk storage medium, another magnetic storage device, or the like. It should be noted that the memory in the system and method described in this specification is intended to include but is not limited to these and any memory of another suitable type.

It should be noted that the memory 1204 may be independent of the processor 1201, or may be integrated with the processor 1201. The memory 1204 may be configured to store the instructions, program code, some data, or the like. The memory 1204 may be located in the electronic device 1200, or may be located outside the electronic device 1200. This is not limited. The processor 1201 is configured to execute the instructions stored in the memory 1204, to implement the method provided in the foregoing embodiment of this application.

In an example, the processor 1201 may include one or more processors, for example, a processor 0 and a processor 1 in FIG. 12.

In an optional implementation, the electronic device 1200 includes a plurality of processors, for example, may further include a processor 1209 in addition to the processor 1201 in FIG. 12.

In an optional implementation, the electronic device 1200 further includes an output device 1205 and an input device 1206. For example, the input device 1206 is a device like a keyboard, a mouse, a microphone, or a joystick, and the output device 1205 is a device like a display or a speaker (speaker).

It should be noted that the electronic device 1200 may be a chip system or a device having a structure similar to that in FIG. 12. The chip system may include a chip, or may include the chip and another discrete device. Actions, terms, and the like in embodiments of this application may be mutually referenced. This is not limited. In embodiments of this application, a name of a message exchanged between devices, a name of a parameter in the message, or the like is merely an example. Another name may alternatively be used during specific implementation. This is not limited. In addition, the composition structure shown in FIG. 12 does not constitute a limitation on the electronic device 1200. In addition to the components shown in FIG. 12, the electronic device 1200 may include more or fewer components than those shown in FIG. 12, or a combination of a part of the components, or an arrangement of different components.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

FIG. 13 is a diagram of a structure of an image generation apparatus according to an embodiment of this application. The image generation apparatus is applicable to the scenario shown in the foregoing method embodiment. For ease of description, FIG. 13 shows only main components of the image generation apparatus, including a processor 1301, a memory 1302, a control circuit 1303, and an input/output apparatus 1304. The processor 1301 is mainly configured to: process a communication protocol and communication data, execute a software program, and process data of the software program. The memory 1302 is mainly configured to store a software program and data. The control circuit 1303 is mainly configured to supply power and transmit various electrical signals. The input/output apparatus 1304 is mainly configured to receive data input by a user and output data to the user.

When the image generation apparatus is the processor 1301, the control circuit 1303 may be a main board. The memory 1302 includes a medium having a storage function, for example, a hard disk, a RAM, or a ROM. The processor 1301 may include a baseband processor 1301 and a central processing unit. The baseband processor is mainly configured to process the communication protocol and communication data. The central processing unit is mainly configured to: control the entire image generation apparatus, execute the software program, and process the data of the software program. The input/output apparatus 1304 includes a display, a keyboard, a mouse, and the like. The control circuit 1303 may further include or be connected to a transceiver circuit or a transceiver, for example, a network cable interface, and is configured to send or receive data or a signal, for example, perform data transmission and communication with another device. Further, an antenna may be further included, configured to receive and send radio signals, and configured to perform data/signal transmission with another device.

An embodiment of this application further provides an image generation apparatus. The apparatus includes at least one processor. When the at least one processor executes program code or instructions, the foregoing related method steps are implemented to implement the image generation method in the foregoing embodiment.

Optionally, the apparatus may further include at least one memory. The at least one memory is configured to store the program code or the instructions.

An embodiment of this application further provides a computer storage medium. The computer storage medium stores computer instructions. When the computer instructions are run on an image generation apparatus, the image generation apparatus is enabled to perform the foregoing related method steps to implement the image generation method in the foregoing embodiment.

An embodiment of this application further provides a computer program product. When the computer program product runs on a computer, the computer is enabled to perform the foregoing related steps, to implement the image generation method in the foregoing embodiment.

An embodiment of this application further provides an image generation apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, to enable the chip to perform the image generation method in the foregoing method embodiment.

It should be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments disclosed in this specification can be implemented by electronic hardware or a combination of computer software and the electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located at one location, or may be distributed on a plurality of network units. A part or all of the units may be selected based on an actual requirement, to achieve the objectives of the solutions in embodiments.

In addition, functional units in embodiments of this application may be integrated into one processing unit, or each of the units may exist alone physically, or two or more units are integrated into one unit.

When being implemented in a form of a software functional unit and sold or used as an independent product, the foregoing functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps of the method described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An image generation method, comprising:
obtaining first data, wherein the first data is used to generate a target image;
determining first information based on the first data, wherein the first information comprises a first weight coefficient, the first weight coefficient is a weight coefficient of a first model, the first model is used to generate an adjustment parameter of a second model, and the second model is used to generate the target image;
adjusting a parameter of the second model based on the first weight coefficient; and
inputting second data into the second model to obtain the target image, wherein the second data comprises the first data.

2. The method according to claim 1, wherein determining the first information based on the first data comprises:
determining a first feature vector based on the first data; and
when a target second feature vector exists in a first database, inputting the first feature vector into the first database to obtain the first information, wherein the first database comprises Q second feature vectors and P pieces of first information corresponding to the Q second feature vectors, the target second feature vector is a second feature vector whose similarity to the first feature vector is greater than a similarity threshold, and both Q and P are positive integers; or
when the target second feature vector does not exist in the first database, inputting the first feature vector into a second database to obtain training set data, and inputting the training set data into the second model to obtain the first information, wherein the second database comprises W third feature vectors and E pieces of training set data corresponding to the W third feature vectors, and both W and E are positive integers.

3. The method according to claim 2, wherein the second database comprises a real-time database, the real-time database comprises real-time training set data, and the real-time training set data is training set data obtained through real-time search.

4. The method according to any one of claims 1 to 3, wherein adjusting the parameter of the second model based on the first weight coefficient comprises:
when the target image generated using the first data is a figure image or an animal image, inputting the first weight information and the first data into a third model to obtain target intermediate data, wherein the target intermediate data is intermediate data of the figure image or intermediate data of the animal image; and
adjusting the parameter of the second model based on the target intermediate data.

5. The method according to any one of claims 1 to 4, wherein inputting the second data into the second model to obtain the target image comprises:
inputting the second data into the second model to obtain M generated images, wherein M is a positive integer; and
determining N generated images in the M generated images as the target image, wherein N is a positive integer.

6. The method according to any one of claims 1 to 5, wherein the first information further comprises an identifier, and the identifier represents a style of the target image.

7. The method according to any one of claims 1 to 6, wherein the second data further comprises the identifier, and the identifier represents the style of the target image.

8. The method according to any one of claims 1 to 7, wherein the first data comprises at least one of a text, a picture, an audio, or a video.

9. An image generation apparatus, comprising a transceiver unit and a processing unit, wherein
the transceiver unit is configured to obtain first data, wherein the first data is used to generate a target image;
the processing unit is configured to determine first information based on the first data, wherein the first information comprises a first weight coefficient, the first weight coefficient is a weight coefficient of a first model, the first model is used to generate an adjustment parameter of a second model, and the second model is used to generate the target image;
the processing unit is further configured to adjust a parameter of the second model based on the first weight coefficient; and
the transceiver unit is further configured to input second data into the second model to obtain the target image, wherein the second data comprises the first data.

10. The apparatus according to claim 9, wherein the processing unit is specifically configured to:
determine a first feature vector based on the first data; and
when a target second feature vector exists in a first database, input the first feature vector into the first database to obtain the first information, wherein the first database comprises Q second feature vectors and P pieces of first information corresponding to the Q second feature vectors, the target second feature vector is a second feature vector whose similarity to the first feature vector is greater than a similarity threshold, and both Q and P are positive integers; or
when the target second feature vector does not exist in the first database, input the first feature vector into a second database to obtain training set data, and input the training set data into the second model to obtain the first information, wherein the second database comprises W third feature vectors and E pieces of training set data corresponding to the W third feature vectors, and both W and E are positive integers.

11. The apparatus according to claim 10, wherein the second database comprises a real-time database, the real-time database comprises real-time training set data, and the real-time training set data is training set data obtained through real-time search.

12. The apparatus according to any one of claims 9 to 11, wherein the processing unit is specifically configured to:
when the target image generated using the first data is a figure image or an animal image, input the first weight information and the first data into a third model to obtain target intermediate data, wherein the target intermediate data is intermediate data of the figure image or intermediate data of the animal image; and
adjust the parameter of the second model based on the target intermediate data.

13. The apparatus according to any one of claims 9 to 12, wherein the transceiver unit is specifically configured to:
input the second data into the second model to obtain M generated images, wherein M is a positive integer; and
determine N generated images in the M generated images as the target image, wherein N is a positive integer.

14. The apparatus according to any one of claims 9 to 13, wherein the first information further comprises an identifier, and the identifier represents a style of the target image.

15. The apparatus according to any one of claims 9 to 14, wherein the second data further comprises the identifier, and the identifier represents the style of the target image.

16. The apparatus according to any one of claims 9 to 15, wherein the first data comprises at least one of a text, a picture, an audio, or a video.

17. An image generation apparatus, comprising at least one processor and a memory, wherein the at least one processor executes a program or instructions stored in the memory, to enable the image generation apparatus to implement the method according to any one of claims 1 to 8.

18. A computer-readable storage medium, configured to store a computer program, wherein when the computer program is run on a computer or a processor, the computer or the processor is enabled to implement the method according to any one of claims 1 to 8.

19. A computer program product, wherein the computer program product comprises instructions, and when the instructions are run on a computer or a processor, the computer or the processor is enabled to implement the method according to any one of claims 1 to 8.

20. A chip, comprising at least one processor and a memory, wherein the at least one processor executes a program or instructions stored in the memory, to implement the method according to any one of claims 1 to 8.
